Europäisches Patentamt

European Patent Office

Office européen des brevets

(19)

(11) Numéro de publication : **0 407 307 B1**

(12) **FASCICULE DE BREVET EUROPEEN**

(45) Date de publication du fascicule du brevet :
04.10.95 Bulletin 95/40

(51) Int. Cl.⁶ : **G06K 9/80,** G07C 9/00

(21) Numéro de dépôt : **90401963.5**

(22) Date de dépôt : **06.07.90**

(54) **Procédé et systèmes de vérification de signatures à optimisation de paramètres statiques.**

(30) Priorité : **06.07.89 FR 8909090**

(43) Date de publication de la demande :
**09.01.91 Bulletin 91/02**

(45) Mention de la délivrance du brevet :
**04.10.95 Bulletin 95/40**

(84) Etats contractants désignés :
**DE GB**

(56) Documents cités :
**US-A- 4 286 255**
**TRAY. Y. Young et KING-SUN FU: "Handbook of pattern recognition and image processing" 1986, Academic Press, Inc., San Diego, US**

(73) Titulaire : **FRANCE TELECOM**
**6, Place d'Alleray**
**F-75015 Paris (FR)**

(72) Inventeur : **Collot, Richard**
**Résidence Perspectives,**
**73 Blvd. du Général Vanier**
**F-14000 Caen (FR)**
Inventeur : **Achemlal, Mohammed**
**19 Chemin de l'Arc**
**F-14000 Caen (FR)**
Inventeur : **Reviller, Marie-Joséphe**
**11 rue Pichauvin**
**F-14790 Verson (FR)**

(74) Mandataire : **Cabinet Martinet & Lapoux**
**BP 405**
**F-78055 Saint Quentin en Yvelines Cédex (FR)**

EP 0 407 307 B1

## Description

La présente invention concerne plus particulièrement des systèmes de vérification de signatures de type statique. Néanmoins, l'invention est applicable également pour des systèmes de vérification de signatures de type mixte dans lesquels sont traités des paramètres statiques et des paramètres dynamiques.

Un système de vérification statique de signatures traite des signatures manuscrites apposées sur des supports tels que des documents en papier. Le système est conçu pour authentifier des signatures, c'est-à-dire pour vérifier leur conformité, par comparaison à des signatures de référence préalablement enregistrées dans le système. Les signatures sont représentées par des paramètres statiques relatifs notamment à des formes et dimensions de leurs dessins.

Un domaine d'application important de la vérification statique de signatures est celui de la vérification des signatures apposées sur des chèques bancaires. En effet, dans les établissements bancaires, les signatures apposées sur les chèques ne sont pas systématiquement vérifiées du fait du côut très élevé qu'entraînerait une vérification effectuée manuellement. Seules sont vérifiées les signatures de chèques correspondant à des sommes élevées ou à des comptes bancaires particuliers. Les pertes financières enregistrées par les établissements bancaires consécutivement à des chèques falsifiés sont significatives. Une automatisation des opérations de vérification permettrait une vérification systématique des signatures sur les chèques et est donc la solution qui s'impose pour éviter de telles pertes.

Un autre domaine d'application de la vérification statique de signatures est celui de l'authentification biométrique des personnes. En effet, par adjonction d'une vérification statique du dessin d'une signature postérieurement à une vérification dynamique lors du tracé de la signature les performances d'un système de vérification sont très sensiblement améliorées du fait qu'il est pratiquement impossible à un fraudeur d'imiter à la fois la vitesse de tracé et le dessin d'une signature.

Les différents systèmes de vérification statique de signatures qui sont disponibles actuellement sont d'origine anglo-saxonne. Ces systèmes présentent l'inconvénient d'avoir été conçus plus spécifiquement pour traiter des signatures de type anglo-saxon, qui sont essentiellement des signatures cursives. Des performances médiocres sont obtenues avec des signatures françaises, et plus généralement des signatures d'origine latine, du fait que ces signatures sont de différents types, cursif, graphique et mixte (cursif-graphique).

Un autre inconvénient de ces systèmes est que l'ensemble des paramètres utilisés pour représenter les signatures est déterminé une fois pour toutes et ne varie pas en fonction des personnes. Une telle approche est sujette à critiques car la fiabilité d'un paramètre varie sensiblement d'une personne à l'autre et un paramètre très stable pour un individu est parfois très variable pour une autre personne.

Le brevet américain US-A-4 286 255 décrit un tel système dans lequel les paramètres figés de représentation d'une signature sont notamment fonction des emplacements et amplitudes de points sélectionnés formant l'enveloppe, ou contour, de la signature par rapport à un niveau de référence.

La présente invention vise à fournir un procédé et des systèmes de vérification de signatures ne présentant pas les inconvénients ci-dessus.

A cette fin, le procédé selon l'invention pour vérifier la conformité de signatures échantillons avec des signatures de référence est tel que défini dans la revendication 1.

D'autres caractéristiques du procédé sont définies dans les revendications 2 et 3.

Un système de vérification de signatures selon l'invention pour la mise en oeuvre du procédé ci-dessus est caractérisé en ce qu'il comprend des moyens pour lire des signatures échantillons à vérifier sur des supports respectifs de manière à produire des signaux numériques représentatifs, des moyens pour détecter les identités supposées de signataires desdites signatures échantillons surlesdits supports respectifs, des moyens activés lors d'une phase d'apprentissage pour produire des fichiers de référence respectivement associés aux signatures de référence par sélection de paramètres optimaux et calcul de valeurs moyennes des paramètres optimaux et de valeurs d'écarts de paramètres à partir de plusieurs échantillons de signatures de référence, des moyens pour mémoriser les fichiers de référence, des premiers moyens activés pendant une phase opérationnelle de vérification des signatures échantillons pour calculer des fichiers de paramètres correspondant aux signatures échantillons, des seconds moyens pour calculer des distances entre les valeurs moyennes des paramètres optimaux et les paramètres des signatures échantillons respectivement en réponse aux identités supposées des signataires adressant les fichiers de référence, et des moyens pour décider de la conformité des signatures échantillons avec les signatures de référence en fonction de comparaisons desdites distances avec au moins un seuil de décision .

D'autres caractéristiques du système de vérification sont définies dans les revendications 5 et 6.

L'invention sera mieux comprise à la lecture de la description suivante du procédé et de plusieurs réalisations préférées des systèmes de vérification de signatures selon l'invention en référence aux dessins annexés correspondants dans lesquels :

- la Fig. 1 est un bloc-diagramme montrant la structure matérielle d'un système selon l'invention pour la vérification des signatures apposées sur des chèques bancaires ;
- la Fig. 2 est un bloc-diagramme fonctionnel du système de la Fig. 1 ;
- les Figs. 3 à 13 sont relatives à la définition des paramètres statiques calculés par le système pour la vérification des signatures ;
- les Figs. 14 et 15 sont des courbes montrant l'évolution de taux d'erreur en fonction de seuils de décision respectivement lorsque les paramètres sont quelconques et lorsque les paramètres sont sélectionnés à l'aide d'un algorithme d'optimisation ; et
- la Fig. 16 montre en détail l'algorithme d'optimisation des paramètres qui est mis en oeuvre dans le système.

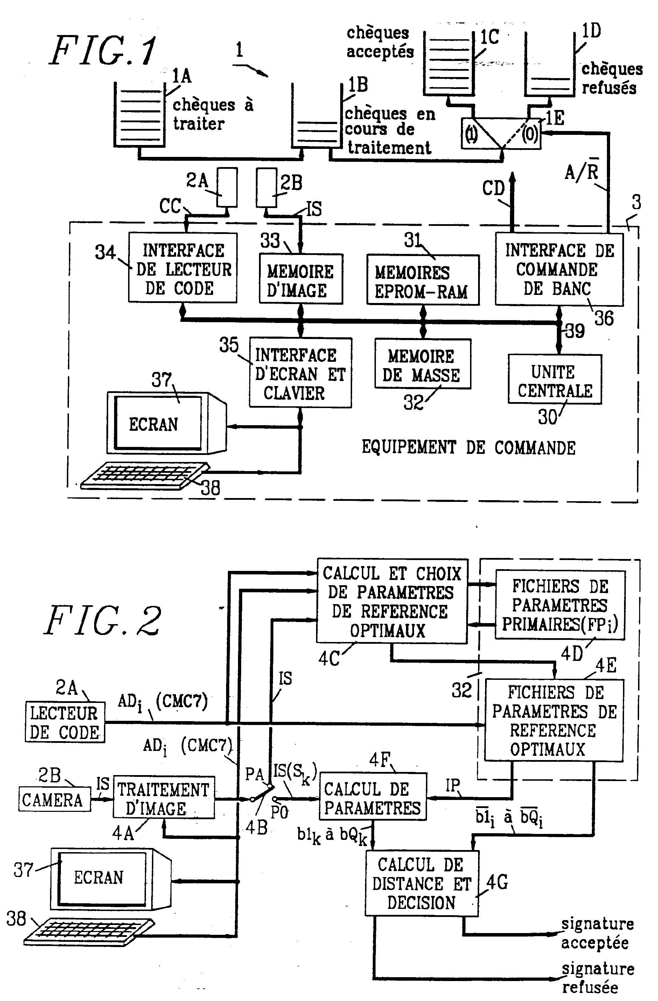

En référence à la Fig. 1, un système selon l'invention comprend essentiellement quatre magasins 1A à 1D équipant un banc d'entraînement de chèques 1, un lecteur de code 2A, une caméra vidéo 2B, et un équipement de commande 3.

Le magasin 1A contient des chèques à traiter. A l'aide de moyens mécaniques classiques les chèques sont extraits un par un du magasin 1A et sont convoyés à travers le banc 1 vers le magasin 1B. Au cours de leur transfert du magasin 1A vers le magasin 1B, les chèques sont vus successivement par le lecteur de code 2A et la caméra 2B.

Le lecteur 2A a pour fonction de lire un code de type CMC7 apposé sur un chèque afin de permettre l'identification de l'émetteur du chèque. Un signal numérique CC représentatif du code CMC7 lu sur le chèque est transmis par le lecteur 2A vers l'équipement de commande 3.

La caméra 2B a pour fonction de produire une image numérique de la signature apposée sur le chèque. La caméra 2B est de préférence de type CCD et elle délivre en sortie des signaux numériques IS transmis à l'équipement de commande 3.

Après son passage devant le lecteur 2A et la caméra 2B, le chèque est stocké temporairement dans le magasin 1B pendant une durée au moins égale à un temps nécessaire à l'équipement 3 pour traiter les signaux CC et IS correspondants et prendre une décision relative à la vérification de la signature. Un signal de décision A/$\overline{R}$ est produit par l'équipement 3. Le signal A/$\overline{R}$ à l'état "1" indique que la signature apposée sur le chèque est authentifiée et acceptée par l'équipement de commande 3 comme étant celle correspondant à l'émetteur du chèque indiqué par le signal CC, et consécutivement des moyens mécaniques d'aiguillage 1E extraient le chèque du magasin 1B et le transfèrent vers le magasin 1C. Le signal A/$\overline{R}$ à l'état "0" indique que la signature apposée sur le chèque n'est pas authentifiée par l'équipement 3 comme étant celle correspondant à l'émetteur du chèque indiqué par le signal CC, et consécutivement les moyens mécaniques d'aiguillage 1E extraient le chèque du magasin 1B et le transfèrent vers le magasin 1D. Dans les magasins 1C et 1D sont donc stockés respectivement des chèques acceptés et des chèques refusés par l'équipement 3. Les chèques refusés contenus dans le magasin 1D seront ensuite traités manuellement par un opérateur. Divers signaux de commande CD, outre le signal A/$\overline{R}$, sont également fournis par l'équipement 3 afin de commander le fonctionnement du banc d'entraînement de chèques 1.

L'équipement de commande 3 comprend essentiellement une unité centrale 30, des mémoires de programme et de travail 31 de types EPROM et RAM, une mémoire de masse 32 par exemple sous la forme d'un disque dur, une mémoire d'image 33, des interfaces 34, 35 et 36, et des moyens de dialogue homme-machine sous la forme d'un écran vidéo 37 et d'un clavier 38.

L'unité centrale 30 est constituée par exemple par un microprocesseur. L'unité centrale 30 est connectée de manière classique par des bus de données, d'adresse et de commande 39 à chacun des éléments 32 à 36 de l'équipement 3.

La mémoire de masse 32 est essentiellement destinée à stocker des fichiers de référence pour la vérification des signatures. Eventuellement, et dans le cas notamment où la capacité de la mémoire EPROM 31 n'est pas de taille suffisante, la mémoire de masse 32 héberge partiellement ou en totalité un programme et des utilitaires de gestion du système ainsi que des algorithmes de calcul de paramètres et de vérification de signatures.

La mémoire d'image 33 a pour fonction de mémoriser les images numériques de signatures délivrées par la caméra 28. Les images sont constituées typiquement par 384x516 (colonnes x lignes) pixels codés sur 252 niveaux de gris. Selon une variante, la mémoire d'image 33 est remplacée par une station de traitement d'image, par exemple de type IDS 408, associée à l'équipement de commande 3. De préférence, la liaison entre la caméra 2B et la mémoire d'image 33 est de type DMA (Direct Memory Access).

L'interface de lecteur de code 34 est reliée au lecteur de code 2A à travers un port de communication, par exemple une liaison série de type RS232. L'interface 34 réalise une conversion série-parallèle et délivre le signal CC sous forme de mots constitués de plusieurs bits en parallèle.

L'interface d'écran et clavier 35 a pour fonction de connecter l'écran 37 et le clavier 38 à l'équipement 3.

L'interface de commande du banc 36 produit les signaux de commande CD et le signal de décision $A/\overline{R}$ a partir de mots de commande transmis par l'unité centrale 30.

En référence à la Fig. 2, il est maintenant décrit les traitements effectués par l'équipement de commande 3 lors d'une phase d'apprentissage et lors d'une phase opérationnelle d'authentification de signatures.

La phase d'apprentissage est prévue afin de calculer et mettre en place dans l'équipement 3 des fichiers de paramètres de référence qui sont nécessaires pour la vérification des signatures lors de la phase opérationnelle d'authentification.

Il est supposé en exemple de réalisation que le système est configuré pour la vérification de I=100 signatures différentes $S_l$, $S_2$... $S_i$, ...$S_l$ correspondant en principe à des signataires différents sauf si certains possèdent plusieurs modèles de signature, où i est un indice entier compris entre I et I = 100.

I=100 fichiers de paramètres de référence $FR_l$, $FR_2$... $FR_i$,... $FR_l$ correspondant respectivement aux I=100 signatures $S_1$, $S_2$... $S_i$,...$S_l$ sont mémorisés dans l'équipement 3. Les fichiers $FR_i$ ont des tailles différentes et contiennent chacun un nombre variable de paramètres déterminés pour une vérification optimale de la signature $S_i$ correspondante. Un fichier de paramètres de référence $FR_i$ représentatif d'une signature $S_i$ est identifié à l'aide d'une adresse $AD_i$ correspondant au code CMC7 du titulaire du chèque.

Pendant la phase d'apprentissage, pour chaque signature $S_i$, par exemple J=10 échantillons différents $S_{il}$, $S_{i2}$... $S_{ij}$,... $S_{iJ}$ correspondant à la signature de référence $S_i$ sont présentés successivement devant l'objectif de la caméra 2B et sont lus par la caméra. L'indice j est un entier compris entre 1 et J = 10.

Dans l'équipement 3, chacune des images de signature IS délivrée par la caméra 2B est traitée dans un module de programme de traitement d'image 4A. Le traitement effectué par le module 4A sur une image comprend essentiellement un contrôle de qualité d'image, la binarisation de l'image sur des premier et second niveaux correspondant respectivement à un niveau blanc et à un niveau noir, le filtrage de tâches noires parasites sur l'image de surfaces supérieures à une surface de seuil prédéterminée, et la détermination d'une fenêtre de travail encadrant très précisément la signature. De préférence, le traitement réalisé est également contrôlé visuellement par un opérateur à partir de l'écran 37.

Schématiquement, un interrupteur 4B ayant deux positions PA et PO est représenté à la Fig. 2. Les positions PA et PO correspondent respectivement à la phase d'apprentissage et à la phase opérationnelle d'authentification. Lorsque l'équipement 3 est en phase d'apprentissage PA, les images de signatures délivrées par le module 4A sont transférées vers un module de calcul et choix de paramètres de référence optimaux 4C.

Typiquement pour chacun des échantillons de signature $S_{ij}$, 30 paramètres $a1_{ij}$ à $a30_{ij}$ sont calculés par le module 4C. Les paramètres a1 à a30 sont prédéterminés pour être représentatifs de signatures cursives et/ou graphiques. La liste de ces paramètres est donnée ci-dessous :

- Rapport de dimensions d'une fenêtre de travail à 10 % contenant la signature (paramètre a1) ;
- Moment d'inertie normalisé de la signature par rapport à un axe des abscisses X (paramètre a2) ;
- Moment d'inertie normalisé de la signature par rapport à un axe des ordonnées Y (paramètre a3) ;
- Facteur de forme (paramètre a4) ;
- Nombre de points de contour de direction verticale de la signature sur les nombres des points de contour de la signature (paramètre a5) ;
- Nombre de points de contour de direction horizontale sur le nombre total de points de contour de la signature (paramètre a6) ;
- Nombre de points de contour selon une première direction oblique sur le nombre total de points de contour de la signature (paramètre a7) ;
- Nombre de points de contour selon une seconde direction oblique sur le nombre total de points de contour de la signature (paramètre a8) ;
- Nombre de points de contour sur un demi-périmètre de la fenêtre à 10 % (paramètre a9) ;
- Rapports de transitions de niveau (paramètres a10 à a21) ;
- Densités de transitions de niveau (paramètres a22 et a23) ;
- Rapport de dimensions de la signature après élimination de grands traits (a24) ;
- Rapports de dimensions de la signature avec les grands traits sur des dimensions de la signature sans les grands traits (paramètres a25 à a28) ;
- Rapport de la longueur d'une enveloppe primaire de la signature sur le demi-périmètre de la fenêtre à 10 % (paramètre a29) ;
- Rapport de la surface de l'enveloppe primaire de la signature sur la surface de la fenêtre à 10 % (paramètre a30).

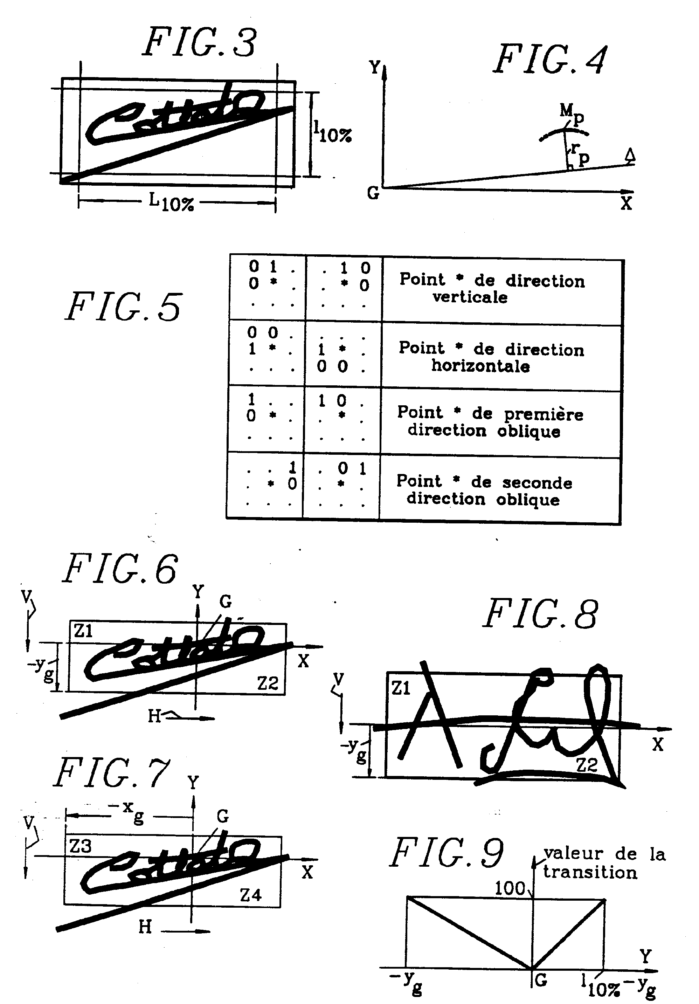

En référence à la Fig. 3, des dimensions $L_{10\%}$ et $l_{10\%}$ d'une fenêtre de travail à 10 % sont calculées en éliminant 10 % des points noirs de la signature de chaque côté de celle-ci. Il est ainsi obtenu une meilleure stabilité des dimensions du fait que les extrémités de grands traits, de longueurs peu stables, sont éliminées. Le paramètre a1 est défini par l'égalité :

$$a1 = (100 \times L_{10\%})/l_{10\%}.$$

En référence à la Fig. 4, soit un axe $\Delta$ passant par un centre de gravité G de la signature et correspondant à un axe de direction de la signature. En considérant que chaque point $M_p$ de la signature a une masse égale à l'unité, le moment d'inertie $I_\Delta$ de la signature par rapport à l'axe $\Delta$ est donné par l'égalité :

$$I_\Delta = \sum_{p=1}^{P} r^2_p = a^2 \cdot \left(\sum_{p=1}^{P} y^2_p\right) + b^2 \cdot \left(\sum_{p=1}^{P} x^2_p\right) - 2ab \cdot \left(\sum_{p=1}^{P} x_p \cdot y_p\right),$$

dans laquelle $r_p$ est la distance du point $M_p$ considéré par rapport à l'axe $\Delta$, $x_p$ et $y_p$ sont les coordonnées du point $M_p$ dans un repère orthogonal (G,X,Y), a et b sont les coefficients directeurs de l'axe $\Delta$, et p est un indice entier variant de 1 à une valeur maximale P afin de couvrir l'ensemble des points à traiter de la signature.

Les moments d'inertie $I_X$ et $I_Y$ respectivement par rapport aux axes X et Y sont définis par les égalités :

$$I_X = \sum_{p=1}^{P} x^2_p,$$

et

$$I_Y = \sum_{p=1}^{P} y^2_p.$$

Les paramètres a2, a3 et a4 sont exprimés par les égalités :

$$a2 = (1000 \times I_X)/(l^2_{10\%} \times s),$$
$$a3 = (1000 \times I_Y)/(L^2_{10\%} \times s), \text{ et}$$
$$a4 = (10 \times I_Y)/I_X,$$

s étant le nombre de points de la signature.

En référence à la Fig. 5, les points de contour de la signature peuvent avoir quatre orientations différentes. L'orientation d'un point de contour donné est déterminée en fonction de la configuration des points environnants. Les différentes configurations possibles sont montrées sous forme de tableau à la Fig. 5. Les notations "1", "0" et "." correspondent respectivement à un point blanc, un point noir et un point blanc ou noir. Le symbole "*" représente le point blanc de contour considéré. Les paramètres a5, a6, a7 et a8 sont définis par les égalités :

$$a5 = (100 \times np_v)/np_c,$$
$$a6 = (100 \times np_h)/np_c,$$
$$a7 = (100 \times np_{d1})/np_c, \text{ et}$$
$$a8 = (100 \times np_{d2})/np_c,$$

dans lesquelles $np_c$ est le nombre total de points de contour, $np_v$ est le nombre de points de contour de direction verticale, $np_h$ est le nombre de points de contour de direction horizontale, $np_{d1}$ est le nombre de points de contour selon la première direction oblique, et $np_{d2}$ est le nombre de points de contour selon la seconde direction oblique.

Il est à noter que les paramètres a5 à a8 sont invariants par rapport à l'épaisseur des traits et à la taille de la signature.

Le paramètre a9 est défini par l'égalité :

$$a9 = (100 \times np_c)/(l_{10\%} + L_{10\%}).$$

En référence aux Figs. 6 et 7, les paramètres a10 à a21 sont définis ci-après. Une transition est définie comme un passage d'un point noir à un point blanc lors du parcours d'une ligne ou d'une colonne de la fenêtre de travail. Les transitions horizontales (respectivement les transitions verticales) sont déterminées en parcourant les lignes (respectivement les colonnes) de la fenêtre de travail.

En référence à la Fig. 6, la fenêtre de travail est séparée en deux zones Z1 et Z2 par l'axe X passant par le centre de gravité G de la signature. Les zones Z1 et Z2 sont d'abord parcourues selon un sens horizontal H afin de déterminer des nombres de transitions horizontales $nbh_{Z1}$ et $nbh_{Z2}$ respectivement dans les zones

EP 0 407 307 B1

Z1 et Z2. Les zones Z1 et Z2 sont ensuite parcourues selon un sens vertical V afin de déterminer des nombres de transitions verticales $nbv_{Z1}$ et $nbv_{Z2}$ respectivement dans les zones Z1 et Z2.

En référence à la Fig. 7, la fenêtre de travail est séparée en deux zones Z3 et Z4 par l'axe Y passant par le centre de gravité G de la signature. Les zones Z3 et Z4 sont d'abord parcourues selon le sens vertical V afin de déterminer des nombres de transitions verticales $nbv_{Z3}$ et $nbv_{Z4}$ respectivement dans les zones Z3 et Z4. Les zones Z3 et Z4 sont ensuite parcourues selon un sens horizontal H afin de déterminer des nombres de transitions horizontales $nbh_{Z3}$ et $nbh_{Z4}$ respectivement dans les zones Z3 et Z4.

Les paramètres a10 à a15 sont définis par les égalités suivantes :

$$a10 = (100 \times nbh_{Z1})/nbh_{Z2},$$
$$a11 = (100 \times nbv_{Z3})/nbv_{Z4},$$
$$a12 = (100 \times nbh_{Z1})/nbv_{Z3},$$
$$a13 = (100 \times nbh_{Z1})/nbv_{Z4},$$
$$a14 = (100 \times nbh_{Z2})/nbv_{Z3}, \text{ et}$$
$$a15 = (100 \times nbh_{Z2})/nbv_{Z4}.$$

Les paramètres $a_{10}$ à $a_{15}$ sont peu sensibles par rapport à la position du centre de gravité G.

Les paramètres a16 à a21 sont définis par les égalités suivantes :

$$a16 = (100 \times nbh^*_{Z3})/nbh^*_{Z4},$$
$$a17 = (100 \times nbv^*_{Z1})/nbv^*_{Z2},$$
$$a18 = (100 \times nbh^*_{Z3})/nbv^*_{Z1},$$
$$a19 = (100 \times nbh^*_{Z3})/nbv^*_{Z2},$$
$$a20 = (100 \times nbh^*_{Z4})/nbv^*_{Z1}, \text{ et}$$
$$a21 = (100 \times nbh^*_{Z4})/nbv^*_{Z2}.$$

Le symbole "*" au-dessus des nombres $nbh_{Z3}$, $nbh_{Z4}$, $nbv_{Z1}$ et $nbv_{Z2}$ dans ces dernières égalités indique que pour le calcul desdits nombres, la valeur attribuée à une transition n'est pas une valeur déterminée fixe comme pour le calcul des nombres $nbh_{Z1}$, $nbh_{Z2}$, $nbv_{Z3}$ et $nbv_{Z4}$, mais est une valeur qui est proportionnellement dépendante de la position de la transition dans le repère (G, X, Y). En effet, les nombres de transitions $nbh_{Z3}$, $nbh_{Z4}$, $nbv_{Z1}$ et $nbv_{Z2}$ peuvent varier très rapidement avec la position du centre de gravité G de la signature du fait que les sens de parcours correspondants sont, pour le calcul de ces nombres, perpendiculaires aux axes H et V. Ainsi par exemple, comme illustré avec la signature montrée à la Fig. 8, si un grand trait horizontal de la signature est proche de l'axe X passant par le centre de gravité G, les nombres de transitions dans les zones Z1 et Z2 varieront de façon non négligeable suivant que ledit grand trait se trouve au-dessus ou au-dessous de l'axe X. La même instabilité est susceptible de se produire pour les grands traits verticaux au voisinage du centre de gravité. Les valeurs des transitions verticales sont pondérées par une courbe telle que celle montrée à la Fig. 9. Dans cette courbe, $-y_g$ représente l'ordonnée du bord inférieur de la fenêtre de travail. De même, les valeurs des transitions horizontales sont pondérées par une courbe analogue à celle de la Fig. 9 dans laquelle Y, $-y_g$ et $1_{10\%}$ sont remplacés respectivement par X, $-x_g$ et $L_{10\%}$, où $-x_g$ représente l'abscisse du bord gauche de la fenêtre de travail.

Les paramètres a22 et a23 représentatifs de densités de transitions sont calculés à partir des nombres de transitions $nbh_{Z1}$, $nbh_{Z2}$, $nbv_{Z3}$ et $nbv_{Z4}$ :

$$a22 = (nbh_{Z1} + nbh_{Z2})/l_{10\%}, \text{ et}$$
$$a23 = (nbv_{Z3} + nbv_{Z4})/L_{10\%}.$$

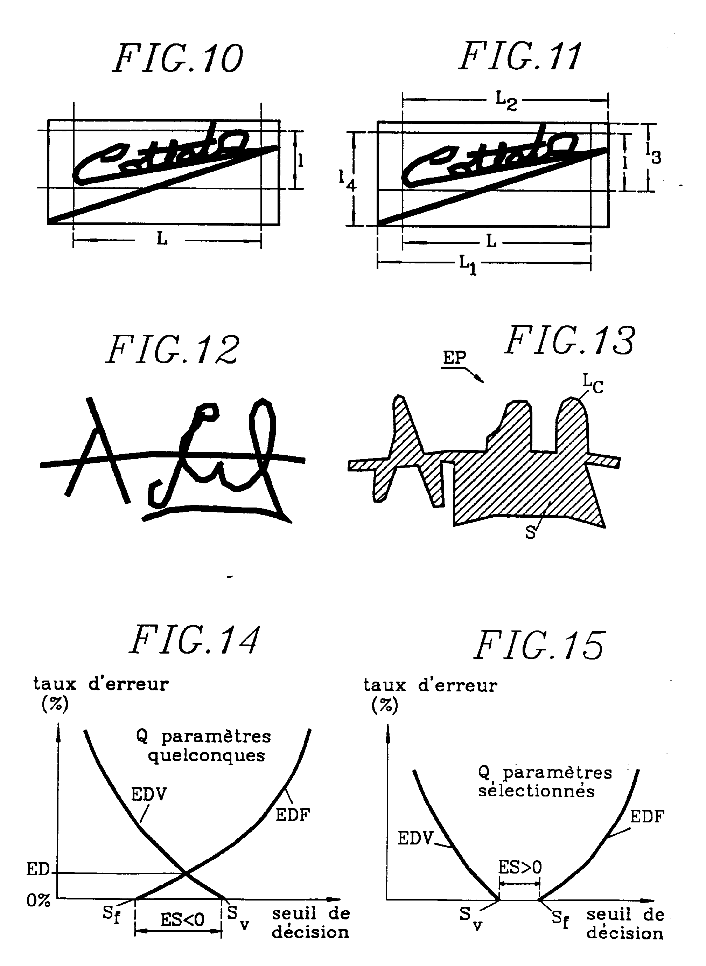

En référence à la Fig. 10, le paramètre a24 est déterminé par l'égalité suivante :

$$a24 = (100 \times L)/l,$$

où L et l sont les dimensions de la fenêtre contenant la signature après élimination des grands traits de la signature.

En référence à la Fig. 11, les paramètres a24 à a28 sont représentatifs de rapports entre des dimensions de la signature avec les grands traits sur des dimensions de la signature sans les grands traits :

$$a25 = (100 \times L_1)/L,$$
$$a26 = (100 \times L_2)/L,$$
$$a27 = (100 \times l_3)/l, \text{ et}$$
$$a28 = (100 \times l_4)/l.$$

En référence aux Figs. 12 et 13, l'enveloppe primaire EP de la signature est déterminée en suivant un balayage vertical. Selon une ligne verticale, les points inclus dans l'enveloppe primaire sont compris entre une première transition blanc-noir détectée et une dernière transition noir-blanc détectée. La longueur du contour $L_C$ ainsi que la surface S de l'enveloppe primaire sont calculées. Les paramètres a29 et a30 sont déterminés à partir des grandeurs $L_C$ et S, selon les égalités suivantes :

$$a29 = (100 \times L_C)/(L_{10\%} + l_{10\%}), \text{ et}$$

6

$$a30 = (100 \times S)/(L_{10\%} \times l_{10\%}).$$

En référence à nouveau à la Fig. 2, le module 4C calcule les paramètres $a1_{ij}$ à $a30_{ij}$ correspondant à chaque échantillon de signature $S_{ij}$ et organise lesdits paramètres en I=100 fichiers de paramètres primaires $FP_1$ à $FP_l$. Les fichiers $FP_i$ sont sauvegardés en mémoire et représentés à la Fig. 2 par le module 4D. Un fichier $FP_i$ est identifié par l'adresse correspondante $AD_i(CMC7)$ et contient des paramètres $a1_{i1}$ à $a30_{i1}$, $a1_{i2}$ à $a30_{i2}$, ... $a1_{iJ}$ à $a30_{iJ}$ correspondant aux J=10 échantillons $S_{i1}$ à $S_{iJ}$ d'une même signature $S_i$. L'adresse $AD_i$, comme montré à la Fig. 2, est transmise au moyen du lecteur de code 2A ou du clavier 38.

Le traitement réalisé par le module 4C afin de déterminer les paramètres de référence optimaux pour chaque signature $S_i$ est maintenant décrit.

Pour chaque signature $S_i$, il est considéré deux classes de signatures, une classe de signatures authentiques SA et une classe de signatures fausses SF. La classe de signatures authentiques SA correspondant à la signature $S_i$ est constituée par les J=10 échantillons de la signature $S_i$. La classe de signatures fausses pour la signature $S_i$ est constituée par les $(I-I) \times J = 99 \times 10 = 990$ échantillons correspondant aux I-l=99 signatures $S \neq S_i$.

Pour chaque signature $S_i$, à partir de l'ensemble des paramètres correspondants $a1_{i1}$ à $a30_{i1}$, $a1_{i2}$ à $a30_{i2}$, ... $a1_{iJ}$ à $a30_{iJ}$ est calculée une représentation statistique sous la forme de 30 paramètres moyens $\overline{a1_i}$ à $\overline{a30_i}$ et de 30 écarts correspondants $(a1_{i, max} - a1_{i, min})$ à $(a30_{i, max} - a30_{i, min})$ entre des valeurs maximales et des valeurs minimales des paramètres.

Pour décider si une signature $S_k$ est vraie ou fausse, c'est-à-dire conforme ou non conforme à la signature $S_i$, une distance $D (\overline{S}_i, S_k)$ est calculée entre un premier ensemble de paramètres moyens $\overline{b1_i}$ à $\overline{bQ_i}$, où Q est un indice entier au maximum égal à 30, pris parmi les paramètres $\overline{a1_i}$ à $\overline{a30_i}$ et un second ensemble de paramètres $b1_k$ à $bQ_k$ représentatif de la signature à vérifier $S_k$ et pris parmi les paramètres $a1_k$ à $a30_k$ correspondant à la signature $S_k$. La distance D est définie de la manière suivante :

$$D(\overline{S}_i, S_k) = \sum_{q=1}^{q=Q} \Delta bq,$$

où $\Delta bq = |bq_k - \overline{bq_i}| /(bq_{i, max} - bq_{i, min})$.

Le terme d'écart $(bq_{i, max} - bq_{i, max})$ est introduit afin de pondérer la contribution d'un paramètre proportionnellement à son instabilité.

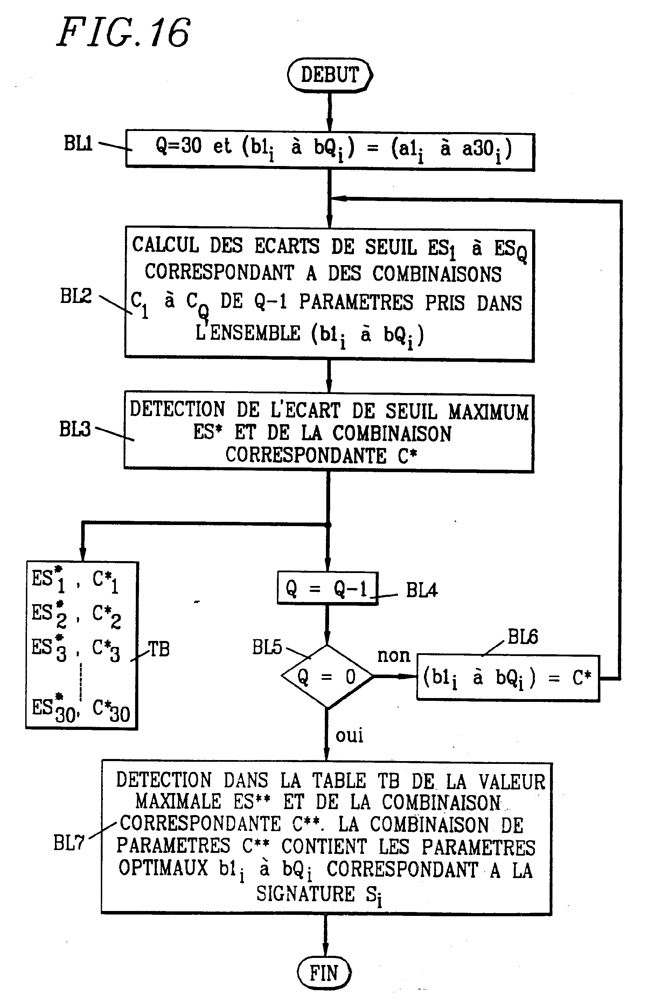

Le traitement d'optimisation des paramètres pour la signature $S_i$ consiste à sélectionner les Q paramètres $b1_i$ à $bQ_i$ qu'il convient de choisir parmi les 30 paramètres disponibles $a1_i$ à $a30_i$. L'algorithme d'optimisation est décrit ci-après en référence à la Fig. 16 et est de type "Jacknife" ou "Leave-one-out". Le critère de sélection utilisé est la maximalisation d'un écart de seuil ES :

$$ES = S_f - S_v.$$

Le seuil $S_v$ est le seuil de décision tel que si la distance D est supérieure au seuil $S_v$ alors toutes les signatures de la classe SA sont acceptées.

Le seuil $S_f$ est le seuil de décision tel que si la distance D est inférieure au seuil $S_f$ alors toutes les signatures de la classe SF sont rejetées.

En référence à la Fig. 14, dans le cas où les paramètres ne sont pas sélectionnés, le seuil $S_v$ est de manière générale supérieur au seuil $S_f$, l'écart de seuil ES est négatif et il en résulte un taux minimal d'erreur de décision ED qui est non nul, le taux ED étant égal au taux moyen entre un taux de vraies signatures rejetées EDV et un taux de fausses signatures acceptées EDF.

En référence à la Fig. 15, dans le cas où les paramètres sont sélectionnés, le seuil $S_v$ est inférieur au seuil $S_f$, l'écart de seuil ES est positif et il en résulte un taux minimal d'erreur de décision ED qui est théoriquement nul.

En référence à la Fig. 16, l'algorithme de sélection des paramètres optimaux $b1_i$ à $bQ_i$ correspondant à la signature $S_i$ est décomposable en 8 blocs de traitement notés BL1 à BL7.

Dans le bloc BL1, une initialisation est effectuée. Le nombre de paramètres Q est affecté de la valeur 30 et l'ensemble des paramètres $b1_i$ à $bQ_i$ est pris égal à l'ensemble des paramètres possibles a1 à a30.

Dans le bloc BL2, il est considéré les Q combinaisons différentes $C_1$, $C_2$,... $C_q$, ...$C_Q$ de Q-1 paramètres chacune pris dans l'ensemble de paramètres $b1_i$ à $bQ_i$. Chacune des combinaisons $C_1$ à $C_Q$ est composée de l'ensemble des paramètres $b1_i$ à $bQ_i$ excepté de l'un d'entre eux :

$$C_1 = (b2_i, b3_i,... b(q-1)_i, bq_i, b(q+1)_i,... bQ_i),$$
$$C_2 = (b1_i, b3_i,... b(q-1)_i, bq_i, b(q+1)_i,... bQ_i),$$

EP 0 407 307 B1

$$C_q = (b1_i, b2_i,... b(q-1)_i, b(q+1)_i,... bQ_i),$$
$$C_{Q-1} = (b1_i, b2_i,... b(q-1)_i, bq_i, b(q+1)_i,... b(Q-2)_i, bQ_i),$$

et

$$C_Q = (b1_i, b2_i,... b(q-1)_i, bq_i, b(q+1)_i,... b(Q-2)_i, b(Q-1)_i).$$

Pour chaque combinaison de paramètres $C_q$, il est calculé les distances $D(\overline{S}_i, S_k)$ afin de déterminer des seuils de distance $(S_f)_q$ et $(S_v)_q$ et des écarts de seuil correspondants $ES_q$.

Dans le bloc BL3, un écart de seuil maximum $ES^*$ parmi tous les écarts de seuil calculés $ES_1$ à $ES_Q$ est détecté et la combinaison de paramètres correspondante $C^*$ est retenue.

Dans le bloc BL3, l'écart de seuil maximum $ES^*$ et la combinaison de paramètres correspondante $C^*$ sont mémorisés dans une table TB.

Dans le bloc BL4, la valeur du nombre Q est décrémentée de 1.

Dans le bloc BL5, une comparaison est effectuée sur la valeur du nombre Q.

Dans le cas où la valeur du nombre Q est différente de zéro, dans le bloc BL6, l'ensemble de paramètres $b1_i$ à $bQ_i$ est identifié à la dernière combinaison retenue $C^*$ (BL3) et un nouveau passage de boucle est effectué à partir du bloc BL2.

Dans le cas où la valeur du nombre Q est égale à zéro, 30 passages ont été effectués à travers les blocs BL2 à BL4 et la table TB contient 30 écarts de seuil maximum $ES^*_1$ à $ES^*_{30}$ et 30 combinaisons correspondantes $C^*_1$ à $C^*_{30}$. Consécutivement le bloc BL7 est activé et une combinaison $C^{**}$ correspondant à une valeur maximale $ES^{**}$ est détectée dans la table TB. La sélection est alors terminée et les paramètres optimaux $b1_i$ à $bQ_i$ pour la vérification de la signature $S_i$ sont contenus dans la combinaison $C^{**}$.

En référence à la Fig. 2, le module 4E renferme I=100 fichiers de paramètres de référence optimaux $FR_1$ à $FR_I$ correspondant respectivement aux I=100 signatures $S_1$ à $S_I$ Un fichier $FR_i$ contient les Q paramètres optimaux moyens $\overline{b1}_i$ à $\overline{bQ}_i$ correspondant à la signature $S_i$ et les Q écarts $(b1_{i,max} - b1_{i,min})$ à $(bQ_{i,max} - bQ_{i,min})$.

En phase opérationnelle d'authentification, l'interrupteur 4B est en position PO et les images de signatures IS sont transmises vers un module de calcul de paramètres 4F.

Lors du passage d'un chèque devant le lecteur de code 2A et la caméra 2B, une adresse $AD_i$ est délivrée par le lecteur 2A et parallèlement la caméra 2B délivre l'image IS d'une signature $S_k$. L'adresse $AD_i$ est fournie au module 4E et sélectionne dans ce module le fichier de paramètres de référence correspondant $FR_i$. Le module 4F reçoit des informations IP transmises par le module 4E et lui indiquant les paramètres $b1_k$ à $bQ_k$ qu'il convient de calculer. Les paramètres calculés $b1_k$ à $bQ_k$, les paramètres $\overline{b1}_i$ à $\overline{bQ}_i$ et les écarts $(b1_{i,max} - b1_{i,min})$ à $(bQ_{i,max} - bQ_{i,min})$ contenus dans le fichier $FR_i$ sont ensuite transmis respectivement par les modules 4F et 4E et sont fournis à un module de calcul de distance et décision 4G.

Le module 4G calcule la distance $D(\overline{S}_i, S_k)$ à partir des paramètres $\overline{b1}_i$ à $\overline{bQ}_i$, des écarts $(b1_{i,max} - b1_{i,min})$ à $(bQ_{i,max} - bQ_{i,min})$ et des paramètres $b1_k$ à $bQ_k$. La distance calculée D est comparée à un seuil de décision S qui est déterminé, pendant la phase d'apprentissage, de telle sorte que toutes les signatures vraies soient acceptées. Dans le cas où la distance D est inférieure au seuil S, la signature $S_k$ est considérée conforme à la signature $S_i$ et est acceptée. Dans le cas où la distance D est supérieure au seuil S, la signature $S_k$ est considérée différente de la signature $S_i$ et est refusée.

**Revendications**

1. Procédé de vérification de signatures pour vérifier la conformité de signatures échantillons ($S_k$) avec des signatures de référence ($S_i$) en fonction de plusieurs paramètres notamment de type statique (b1 à bQ) mémorisés dans des fichiers ($FR_i$) représentant respectivement lesdites signatures, caractérisé par la production de chacun desdits fichiers ($FR_i$) sous la forme d'un nombre variable (Q) de paramètres sélectionnés spécifiquement parmi un ensemble prédéterminé de paramètres (a1 à a30) par un algorithme d'optimisation de manière à minimiser des erreurs de décision, l'ensemble prédéterminé de paramètres (a1 à a30) étant constitué de paramètres représentatifs de signatures graphiques et/ou cursives.

2. Procédé conforme à la revendication 1, caractérisé en ce qu'il inclut un algorithme d'optimisation de type "Jacknife" ou "Leave-one-out" afin de produire les fichiers de référence.

3. Procédé conforme à la revendication 1 ou 2, caractérisé en ce que pour vérifier la conformité d'une signature échantillon ($S_k$) avec une signature de référence ($S_i$) il est calculé une distance D entre les paramètres ($bq_k$ et $bq_i$) des fichiers correspondants, ladite distance D étant définie par la relation suivante :

8

$$D = \sum_{q=1}^{q=Q} |bq_k - \overline{bq_i}| / [bq_{i,max} - bq_{i,min}] ,$$

dans laquelle $bq_k$ correspond à des valeurs des paramètres représentatifs de la signature échantillon indicée k, $\overline{bq_i}$ correspond à des valeurs moyennes des paramètres représentatifs de la signature de référence indicée i, $[bq_{i,max} - bq_{i,min}]$ représente un écart de valeurs maximum et minimum correspondant aux paramètres $bq_i$, et Q est le nombre de paramètres compris dans les fichiers.

4. Système de vérification de signatures pour la mise en oeuvre du procédé conforme à la revendication 3, caractérisé en ce qu'il comprend des moyens (2B, 4A) pour lire les signatures échantillons à vérifier ($S_k$) sur des supports respectifs de manière à produire des signaux numériques représentatifs (IS), des moyens (2A) pour détecter les identités supposées ($AD_i$CMC7) de signataires desdites signatures échantillons sur lesdits supports respectifs, des moyens (4C, 4D) activés lors d'une phase d'apprentissage pour produire des fichiers de référence ($FR_i$) respectivement associés aux signatures de référence par sélection de paramètres optimaux (b1 à bQ) et calcul de valeurs moyennes ($\overline{bl}$ à $\overline{bQ}$) des paramètres optimaux et de valeurs d'écarts de paramètres (($b1_{i,max} - b1_{i,min}$) - ($bQ_{i,max} - bQ_{i,min}$)) à partir de plusieurs échantillons de signatures de référence ($S_{ll}$ à $S_{i,j}$), des moyens (4E, 32) pour mémoriser les fichiers de référence, des premiers moyens (4F) activés pendant une phase opérationnelle de vérification des signatures échantillons ($S_k$) pour calculer des fichiers de paramètres ($bq_{k}$) correspondant aux signatures échantillons, des seconds moyens (4G) pour calculer des distances (D) entre les valeurs moyennes des paramètres optimaux ($\overline{bq_i}$) et les paramètres ($bq_k$) des signatures échantillons respectivement en réponse aux identités supposées des signataires ($AD_i$) adressant les fichiers de référence, et des moyens (4G) pour décider de la conformité des signatures échantillons ($S_k$) avec les signatures de référence ($S_i$) en fonction de comparaisons desdites distances (D) avec au moins un seuil de décision (S).

5. Système de vérification de signatures conforme à la revendication 4, caractérisé en ce que les moyens pour produire les fichiers de référence (4C, 4D), les moyens pour mémoriser (4E), les premiers et seconds moyens pour calculer (4F, 4G) et les moyens pour décider (4G) sont réalisés par des modules de programme inclus dans un équipement de commande (3) du système comprenant une unité centrale (30) telle qu'un microprocesseur.

6. Système de vérification de signatures conforme à la revendication 4 ou 5, caractérisé en ce que lesdits supports sont des chèques bancaires incluant chacun une identité de signataire sous la forme d'un code de type CMC7 ($AD_i$) et une signature échantillon du signataire, les moyens pour lire comprennent une caméra vidéo (2B) et des moyens de traitement d'image (4A), et en ce que les moyens pour détecter comprennent un lecteur de code (2A) pour détecter et lire les codes de type CMC7 ($AD_i$) apposés sur des chèques bancaires .

## Patentansprüche

1. Verfahren zur Unterschriftprüfung, um die Übereinstimmung von Unterschriftmustern ($S_k$) mit Referenzunterschriften ($S_i$) im Zusammenhang mit mehreren Parametern insbesondere statischen Typs (b1 bis bQ), die in Dateien ($FR_i$) gespeichert werden, die jeweils die besagten Unterschriften darstellen, gekennzeichnet durch
die Erzeugung jeder der besagten Dateien ($FR_i$) in der Form einer variablen Anzahl (Q) von in einer Gruppe von vorgegebenen Parametern (a1 bis a30) durch einen Optimierungsalgorithmus spezifisch ausgewählten Parametern, damit Entscheidungsfehler zu minimieren, wobei die vorgegebene Gruppe von Parametern (a1 bis a30 ) aus Parametern besteht, die typisch für graphische und/oder kursive Unterschriften sind.

2. Verfahren nach Anspruch 1, dadurch gekennzeichnet, daß es einen Optimierungalgorithmus des Typs "Jacknife" oder "Leave-one-out" einschließt, damit Referenzdateien erzeugt werden.

3. Verfahren nach Anspruch 1 oder 2, dadurch gekennzeichnet, daß zur Prüfung der Übereinstimmung eines Unterschriftmusters ($S_k$) mit einer Referenzunterschrift ($S_i$) eine Distanz D zwischen den Parametern ($bq_k$

und bq$_i$) der entsprechenden Dateien berechnet wird, welche Distanz D durch folgendes Verhältnis definiert wird:

$$D = \sum_{q=1}^{q=Q} |bq_k - \overline{bq_i}| / [bq_{i,max} - bq_{i,min}],$$

in welchem bq$_k$ Werten der Parameter entspricht, die für das Unterschriftmuster mit Index k typisch sind, $\overline{bq_i}$ den Durchschnittswerten der Parameter entspricht, die für die Referenzunterschrift mit Index i typisch sind, [bq$_{i,max}$-bq$_{i,min}$] eine Abweichung der maximalen und minimalen Werten darstellt, die den Parametern bqi entsprechen, und Q die Zahl der in den Dateien enthaltenen Parameter ist.

4. System zur Prüfung von Unterschiften zur Inbetriebnahme des Verfahrens nach Anspruch 3, dadurch gekennzeichnet, daß es Mittel (2B, 4A) enthält, um die zu prüfenden Unterschriftmuster (S$_k$) auf jeweiligen Trägern zu lesen, damit numerische typische Signale (IS) erzeugt werden, Mittel (2A) zum Erkennen der vermuteten Identitäten (AD$_i$CMC7) der Unterzeichneten der besagten Unterschriftmuster auf den jeweiligen besagten Trägern, bei einer Lernphase aufgerufene Mittel (4C, 4D), um Referenzdateien (FR$_i$) zu erstellen, die jeweils mit den Referenzunterschriften durch Auswahl von optimalen Parametern (b1 bis bQ) und Berechnung die Durschnittswerten ($\overline{b1}$ bis $\overline{bQ}$) der optimalen Parameter und von Parameterabweichungswerten ((b1$_{i,max}$-b1$_{i,min}$) - (bQ$_{i,max}$- bQ$_{i,min}$)) assoziiert werden, wobei von mehreren Mustern von Referenzunterschriften (S$_{I1}$ bis S$_{IJ}$) ausgegangen wird, Mittel (4E, 32) um die Referenzdateien zu speichern, während einer Bearbeitungsphase aufgerufene erste Mittel (4F) zur Prüfung von Unterschriftmustern (S$_k$), um Parameterdateien (bq$_k$) zu berechnen, die den Unterschriftmustern entsprechen, zweite Mittel (4G) zur Berechnung der Distanzen (D) zwischen den Durchschnittswerten der optimalen Parameter (bq$_i$) und den Parametern (bq$_k$) der Unterschriftmuster, um jeweils eine Antwort auf die vermuteten Identitäten der die Referenzdateien adressierenden (AD$_i$) Unterzeichneten zu geben, und Mittel (4G), um über die Übereinstimmung der Unterschriftmuster (S$_k$) mit den Referenzunterschriften (S$_I$) unter Berücksichtigung von Vergleichen zwischen der besagten Distanzen (D) und mindestens einer Entscheidungsschwelle zu entscheiden.

5. System zur Prüfung von Unterschriften nach dem Anspruch 4, dadurch gekennzeichnet, daß die Mittel (4C, 4D) zur Erzeugung von Referenzdateien, die Mittel zum Speichern (4E), die ersten und zweiten Mittel zur Berechnung (4F, 4G) und die Mittel zur Entscheidung (4G) durch Programm-Modulen durchgeführt werden, die in einer Steuereinrichtung (3) des Systems eingeschlossen werden, die aus einer Zentraleinheit (30) wie z.B. einem Mikroprozessor besteht.

6. System zur Prüfung von Unterschriften nach dem Anspruch 4 oder 5, dadurch gekennzeichnet, daß die besagten Träger Bankschecks sind, die jeweils die Identität des Unterzeichneten in Form eines Codes vom Typ CMC7 (AD$_i$) und ein Unterschriftmuster des Unterzeichneten enthalten, daß die Mittel zum Lesen aus einer Videokamera (2B) und Mitteln zur Bildverarbeitung (4A) bestehen, und dadurch daß die Mittel zum Erkennen, einen Codeleser (2A) umfassen, um die auf den Bankschecks aufgebrachten Codes vom Typ CMC7 (AD$_i$) zu erkennen und zu lesen.

## Claims

1. Signature verification method for verifying the conformity of samples signatures (S$_k$) with reference signatures (S$_i$) according to several parameters of the static type (b1 to bQ) notably, memorized in files (FR$_i$) respectively representating said signatures, characterized by

   the production of each of said files (FR$_i$) under the form of a variable number (Q) of parameters specifically selected from among a predetermined set of parameters (a1 to a30) by an optimization algorithm in such a way so as to minimize decision errors, the predetermined set of parameters (a1 to a30) being comprised of parameters representative of graphic and/or cursive signatures.

2. Method according to claim 1, characterized in that it includes an optimization algorithm of the "Jacknife" or "Leave-one-out" type in order to produce the reference files.

3. Method according to claim 1 or 2, characterized in that, in order to verify the conformity of a sample signature ($S_k$) with a reference signature ($S_i$), calculating a distance D between the parameters ($bq_k$ and $bq_i$) of the corresponding files, said distance D being defined by the following relation:

$$D = \sum_{q=1}^{q=Q} = |bq_k - \overline{bq_i}| / [bq_{i,\ max} - bq_{i,\ min}],$$

in which $bq_k$ corresponds to values of the parameters representative of the k-indexed sample signature, $\overline{bq_i}$ corresponds to average values of the representative parameters of the i-indexed reference signature, $[bq_{i,\ max} - bq_{i,\ min}]$ represents a difference of maximum and minimum values corresponding to the parameters $bq_i$, and Q is the number of parameters included in the files.

4. Signature verification system for the implementing of the method according to claim 3, characterized in that it comprises means (2B, 4A) for reading the sample signatures to be verified ($S_k$) on respective supports thereby providing representating digital signals (IS), means (2A) for detecting the supposed identities (AD$_i$CMC7) of signatories of said sample signatures on said respective supports, means (4C, 4D) activated during a learning phase for producing reference files (FR$_i$) respectively associated to the reference signatures by selecting optimum parameters (b1 to bQ) and-calculating average values ($\overline{b1}$ to $\overline{bQ}$) of the optimum parameters and parameter difference values (b1$_{i,max}$ - b1$_{i,min}$) - (bQ$_{i,max}$ - bQ$_{i,min}$)) from several samples of reference signatures ($S_{i1}$ to $S_{ij}$), means (4E, 32) for memorizing the reference files, first means (4F) activated during an operational phase of verification of the sample signatures ($S_k$) for calculating files of parameters ($bq_k$) corresponding to the sample signatures, second means (4G) for calculating distances (D) between the average values of the optimum parameters ($\overline{bq_i}$) and the parameters ($bq_k$) of the sample signatures respectively in response to the supposed identities of the signatories (AD$_i$) addressing the reference files, and means (4G) for deciding the conformity of the sample signatures ($S_k$) with the reference signatures ($S_i$) as a function of comparisons of said distances (D) with at least one decision threshold (S).

5. Signature verification system according to claim 4, characterized in that
the reference file producing means (4C, 4D), the memorizing means (4E), the first and second calculating means (4F, 4G) and the deciding means (4G) are embodied by program modules included in a control equipment (3) of the system comprising a central unit (30) such as a microprocessor.

6. Signature verification system according to claim 4 or 5 characterized in that said supports are bank checks each including a signatory identity in the form of a CMC7-Type code (AD$_i$) and a signatory sample-signature, the reading means comprise a video camera (2B) and image processing means (4A), and in that the detecting means comprise a code reader (2A) for detecting and reading the CMC7-type codes (AD$_i$) appended to bank checks.

# FIG.1

# FIG.2

## FIG.3

## FIG.4

## FIG.5

| | | |
|---|---|---|
| 0 1 .<br>0 * .<br>. . . | . 1 0<br>. * 0<br>. . . | Point * de direction verticale |
| 0 0 .<br>1 * .<br>. . . | . . .<br>1 * .<br>0 0 . | Point * de direction horizontale |
| 1 . .<br>0 * .<br>. . . | 1 0 .<br>. * .<br>. . . | Point * de première direction oblique |
| . . 1<br>. * 0<br>. . . | . 0 1<br>. * .<br>. . . | Point * de seconde direction oblique |

## FIG.6

## FIG.7

## FIG.8

## FIG.9

## FIG.10

## FIG.11

## FIG.12

## FIG.13

EP

L$_c$

S

## FIG.14

taux d'erreur
(%)

Q paramètres
quelconques

EDV

EDF

ED

0%

S$_f$

ES<0

S$_v$

seuil de
décision

## FIG.15

taux d'erreur
(%)

Q paramètres
sélectionnés

EDV

EDF

ES>0

S$_v$

S$_f$

seuil de
décision

# *FIG.16*

$$Q=30 \text{ et } (b1_i \text{ à } bQ_i) = (a1_i \text{ à } a30_i)$$
— BL1

CALCUL DES ECARTS DE SEUIL $ES_1$ à $ES_Q$
CORRESPONDANT A DES COMBINAISONS
$C_1$ à $C_Q$ DE Q-1 PARAMETRES PRIS DANS
L'ENSEMBLE $(b1_i \text{ à } bQ_i)$
— BL2

DETECTION DE L'ECART DE SEUIL MAXIMUM
ES* ET DE LA COMBINAISON
CORRESPONDANTE C*
— BL3

$ES^*_1$ , $C^*_1$
$ES^*_2$ , $C^*_2$
$ES^*_3$ , $C^*_3$ — TB
$ES^*_{30}$, $C^*_{30}$

$Q = Q-1$ — BL4

BL5  $Q = 0$  non — BL6  $(b1_i \text{ à } bQ_i) = C^*$

oui

DETECTION DANS LA TABLE TB DE LA VALEUR
MAXIMALE ES** ET DE LA COMBINAISON
CORRESPONDANTE C**. LA COMBINAISON DE
PARAMETRES C** CONTIENT LES PARAMETRES
OPTIMAUX $b1_i$ à $bQ_i$ CORRESPONDANT A LA
SIGNATURE $S_i$
— BL7

DEBUT / FIN

15